# FASCICULE DE BREVET EUROPEEN

(11) **EP 3 342 687 B1**
(45) Date de publication et mention de la délivrance du brevet: **14.07.2021**
(21) Numéro de dépôt: 17207894.1
(22) Date de dépôt: 18.12.2017
(51) Int. Cl.: B62D 25/24, B60R 19/02

(54) **PIÈCE DE CARROSSERIE COMPORTANT UNE OUVERTURE APTE À RECEVOIR UNE TRAPPE**
KAROSSERIETEIL, DAS EINE ÖFFNUNG ZUR AUFNAHME EINER KLAPPE UMFASST
BODYWORK PART COMPRISING AN OPENING ADAPTED TO RECEIVE A HATCH

(30) Priorité: 29.12.2016 FR 1663533
(43) Date de publication de la demande: 04.07.2018
(73) Titulaire: Compagnie Plastic Omnium, 69007 Lyon (FR)
(72) Inventeur: LOUOT, Thierry, 01200 LANCRANS (FR); JEANTON, Raphael, 01640 Saint-Jean-le-Vieux (FR); GOMEZ, Jean-François, 38230 TIGNIEU JAMEYZIEU (FR)
(74) Mandataire: LLR

(56) Documents cités:
- DE-A1- 19 625 641
- DE-U1-202009 012 423
- FR-A1- 2 985 488
- US-A1- 2011 088 228
- US-B2- 8 985 661

## Description

La présente invention est relative à une pièce de carrosserie comportant une ouverture apte à recevoir une trappe, à un ensemble d'habillage comportant une telle pièce de carrosserie et à un procédé de test de qualité d'un tel ensemble.

Une telle pièce de carrosserie est par exemple une peau de pare-chocs, destinée à être disposée en regard d'une poutre de pare-chocs avant ou arrière de véhicule automobile.

On connait des véhicules automobiles comprenant, à l'avant ou à l'arrière, un anneau de remorquage caché par une peau de pare-chocs. Une ouverture est ménagée dans la pièce de carrosserie pour offrir un accès à l'anneau de remorquage, de manière à pouvoir remorquer le véhicule automobile en cas de panne.

Dans un but esthétique, l'ouverture de la pièce de carrosserie est fermée par une trappe amovible. Classiquement, la trappe est retenue en position d'obturation sur la pièce de carrosserie par au moins un mécanisme d'encliquetage, de façon à ce que la trappe soit suffisamment maintenue dans l'ouverture, mais démontable. Dans cette position d'obturation de la trappe, la face visible de la trappe doit affleurer la face visible de la pièce de carrosserie. Pour ce faire, il est connu, par exemple de US8985661 B2, un agencement de la trappe et de la pièce de carrosserie tel qu'un effort de levier peut être exercé sur la trappe, autour d'un axe sensiblement transversal, pour la faire basculer en position de démontage pour son retrait. Une telle trappe cumule un clip de retenue et au moins un ergot, dont l'action se combine à celle du clip pour que la force requise pour démonter la trappe soit supérieure à celle requise pour la mettre en place.

Une telle solution ne donne pas entièrement satisfaction. En effet, on constate dans la pratique que l'ergot est trop sollicité à la déformation et se détériore à l'usage. L'ergot, déformé ou cassé, ne peut plus remplir sa fonction et la trappe quitte facilement la position d'affleurement.

Une autre solution selon le préambule de la revendication 1 est divulguée par US 2011/088228A1.

Un but de la présente invention est de supprimer les inconvénients ci-dessus en fournissant, à moindre coût, une pièce de carrosserie comportant une ouverture apte à recevoir une trappe, avec un positionnement d'affleurement de la trappe sur la pièce de carrosserie qui demeure satisfaisant malgré des montages et démontages répétés de la trappe.

Un autre but est de fournir une trappe encliquetable dont les moyens d'encliquetage ne sont pas fragiles.

A cet effet, l'invention a pour objet une pièce de carrosserie selon la revendication 1.

Grâce à l'invention, la trappe peut conserver un positionnement affleurant sur la pièce de carrosserie, car l'ergot présent sur le bord périphérique de l'ouverture pour aider au positionnement de la trappe à l'affleurement s'escamote et revient en position grâce aux déformations élastiques réversibles de la base de l'ergot. La fatigue de la base de l'ergot est moindre que celle de l'ergot de l'état de la technique car les portions amincies du bord périphérique de l'ouverture autorisent une déformation élastique de ce bord, déformation qui permet à la base de l'ergot d'escamoter la protubérance de l'ergot pour libérer la trappe lors de son montage et de son démontage. De plus, la protubérance de l'ergot n'a pas à être souple - bien que cette caractéristique de rigidité ne soit pas nécessaire selon l'invention -, de sorte que l'ergot peut être relativement massif et solide, ce qui le protège des risques de cassure ou de déformation irréversible.

Selon l'invention, le rebord périphérique présente une face intérieure délimitant l'ouverture et une face extérieure opposée à la face intérieure et chaque portion amincie du rebord résulte uniquement d'un évidement de la face extérieure.

Ainsi, la face intérieure du rebord, qui est potentiellement visible pour un observateur attentif qui scruterait le jeu entre la trappe et le bord périphérique de l'ouverture, ne montre aucune variation d'épaisseur, car les creux du bord périphérique ne se trouvent que sur la face extérieure dudit bord périphérique, laquelle est tournée vers l'intérieur de la pièce de carrosserie, en zone parfaitement invisible si la pièce de carrosserie est montée sur le véhicule.

Dans un mode de réalisation avantageux, la pièce de carrosserie comprend au moins deux bases, chacune pour un ergot ayant une protubérance en saillie du rebord périphérique. Ces deux bases peuvent être disposées symétriquement l'une par rapport à l'autre, pour tenir compte d'une symétrie de forme de l'ouverture, par exemple si cette dernière est trapézoïdale et qu'il est préférable de disposer deux ergots sur deux côtés du trapèze pour assurer la symétrie du maintien en affleurement, plutôt qu'un seul ergot qui serait localisé dans un angle du trapèze.

Dans un mode de réalisation de l'invention, la pièce de carrosserie comprend au moins une plage d'appui s'étendant vers l'intérieur de l'ouverture, sur une partie du contour de l'ouverture et en retrait de la face visible.

Cette plage d'appui est connue dans l'état de la technique, par exemple dans le document déjà cité US8985661B2. Elle retient la trappe d'un côté de l'ouverture en affleurement de la pièce de carrosserie.

Dans un mode de réalisation de l'invention, la pièce de carrosserie comporte, diamétralement opposées sur le contour de l'ouverture et en retrait de la face visible, deux bosses agencées pour former ensemble une surface de roulement définissant un axe de pivotement sensiblement parallèle à la face visible.

Un tel axe de pivotement est connu et permet que la trappe s'engage, respectivement se dégage, de l'ouverture par un mouvement comprenant un pivotement de la trappe vers, respectivement depuis, sa position d'affleurement. Les deux bosses matérialisent une surface sur laquelle la trappe bascule pendant ce pivotement.

Une application particulièrement avantageuse de l'invention est que la pièce de carrosserie soit une peau de pare-chocs.

La présente invention a également pour objet un ensemble d'habillage comprenant une pièce de carrosserie telle que décrite ci-dessus et une trappe ayant une face visible, la trappe étant mobile entre une position d'affleurement dans laquelle la trappe est retenue par l'ergot avec la face visible de la trappe et la face visible de la pièce de carrosserie affleurantes et des positions de désaffleurement dans lesquelles la trappe repousse l'ergot avec la face visible de la trappe et la face visible de la pièce de carrosserie désaffleurantes, **caractérisé en ce que** la base de l'ergot est apte à se déformer élastiquement en escamotant la protubérance de l'ergot lorsque la trappe passe dans les positions de désaffleurement et à reprendre sa forme par retour élastique lorsque la trappe ne se trouve plus dans les positions de désaffleurement.

Dans un mode de réalisation de l'invention, la trappe comporte un bord muni d'un plan incliné servant d'appui à la protubérance de l'ergot en position d'affleurement de la trappe.

Ainsi, le contact entre la trappe et la protubérance de l'ergot se produit le long d'une ligne de contact, ce qui est préférable à un contact entre deux surfaces dont le parallélisme n'est jamais garanti. En outre, la ligne de contact se trouve dans une zone relativement centrale du plan incliné, c'est-à-dire à distance des arêtes entre ce plan incliné et le bord de la trappe, de sorte que l'arête éventuellement visible, pour un observateur très attentif, de la trappe, ne peut présenter aucune marque d'usure due à l'appui de la protubérance de l'ergot.

Dans un mode de réalisation particulier de l'invention, la trappe comporte au moins un clip apte à s'encliqueter contre une face intérieure de la pièce de carrosserie lorsque la trappe est en position d'affleurement. Un tel clip assure, à titre principal, la fixation de la trappe sur la pièce de carrosserie, éventuellement avec l'aide de la plage d'appui.

Enfin, l'invention a pour objet un procédé de contrôle de la qualité d'un ensemble tel que décrit ci-dessus, **caractérisé en ce qu'il** consiste à réitérer la succession d'étapes suivantes au moins cinq fois :
- saisie de la trappe en position d'affleurement,
- déplacement de la trappe en positions de désaffleurement,
- repositionnement de la trappe en position d'affleurement.

Ce procédé ne peut être mis en œuvre que grâce à l'invention, du fait que la fatigue de l'ergot est très peu prononcée, de sorte que cette fatigue ne peut empêcher l'ergot de résister à un tel traitement, à la différence des solutions de l'état de la technique.

L'invention sera mieux comprise à la lecture de la description qui va suivre, donnée uniquement à titre d'exemple et faite en référence aux dessins annexés, dans lesquels :

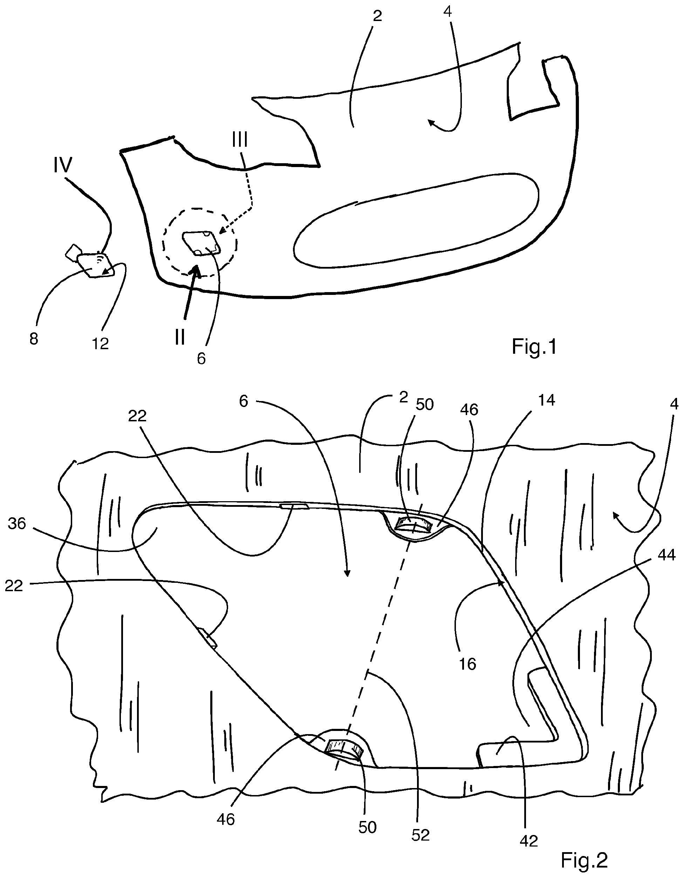

- la figure 1 est une vue en perspective de trois-quarts avant d'une peau de pare-chocs de véhicule automobile selon l'invention ;
- la figure 2 est une vue avant du détail selon la flèche II de la figure 1 ;

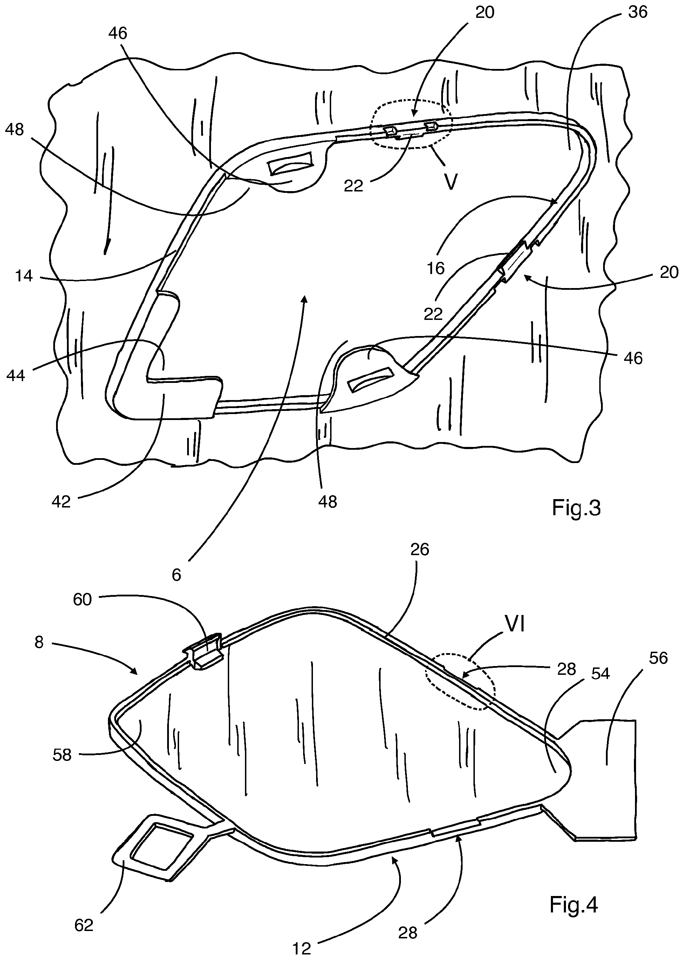

- la figure 3 est une vue arrière du détail selon la flèche III de la figure 1 ;
- la figure 4 est une vue arrière du détail selon la flèche IV de la figure 1 ;
- la figure 5 est une vue du détail V de la figure 3 ;
- la figure 6 est une vue du détail VI de la figure 4 ;
- la figure 7 est une vue en coupe selon VII-VII des figures 5 et 6 ;
- la figure 8 est une vue analogue à la figure 2, la trappe obturant l'ouverture ;
- la figure 9 est une vue en coupe selon IX-IX de la figure 8.

Une peau de pare-chocs avant 2, qui est une pièce de carrosserie de véhicule automobile, est représentée sur les figures.

Cette peau de pare-chocs 2 est destinée à être fixée sur une caisse d'un véhicule automobile, en regard d'une poutre de pare-chocs avant ou arrière (non représentés). Cette peau de pare-chocs 2 présente une face visible 4 de l'extérieur avec un aspect esthétique extérieur satisfaisant, conforme aux attentes des constructeurs automobiles.

Dans d'autres variantes de réalisation non représentées, la pièce de carrosserie 2 peut consister indifféremment en n'importe quelle pièce de carrosserie d'un véhicule automobile, dans le respect de l'exécution de l'invention.

La peau de pare-chocs 2 comporte une ouverture 6 destinée à donner accès à au moins un composant situé dans la caisse en regard de l'ouverture 6, notamment un anneau de remorquage (non représenté). L'ouverture 6 est configurée pour être occultée par une trappe 8, dans un but esthétique, mais aussi pour optimiser l'aérodynamisme du véhicule.

Cette ouverture 6 est traversante. Elle débouche donc sur la face visible 4 et sur une face opposée de la peau de pare-chocs 2, non-visible pour un observateur extérieur au véhicule.

Dans cet exemple, l'ouverture 6 présente une forme sensiblement trapézoïdale. Préférentiellement, l'ouverture 6 présente une forme comprenant au moins un angle aigu. On notera que l'ouverture 6 et la trappe 8 sont de formes sensiblement complémentaires.

La trappe 8 présente une face visible 12 pour un observateur situé à l'extérieur, destinée à obturer l'ouverture 6, voire à la rendre invisible pour un observateur peu attentif.

De préférence, la face visible de la trappe 12 et la face visible 4 de la peau de pare-chocs 2 présentent un même aspect esthétique, c'est-à-dire un même revêtement et/ou un même état de surface. On notera toutefois que différentes variantes de réalisation sont possibles et qu'on peut envisager, sans limitation, une face visible 12 de la trappe 8 ayant un aspect différent de la face visible 4 de la peau de pare-chocs 2.

Selon l'invention, la face visible 12 de la trappe 8 affleure la face visible 4 de la peau de pare-chocs 2, pour donner une esthétique et un aérodynamisme satisfaisants.

La peau de pare-chocs 2 comprend un rebord rentrant 14 périphérique à l'ouverture 6. Ce rebord périphérique 14 prolonge la face visible 4 vers l'intérieur de l'ouverture 6. Le rebord 14 présente une face intérieure 16 délimitant l'ouverture 6 et une face extérieure 18 opposée à la face intérieure 16. Ce rebord périphérique 14 comprend deux bases 20 supportant chacune une protubérance 22 d'un ergot. Cette protubérance 22 fait saillie du rebord périphérique 14 vers l'intérieur de l'ouverture 6.

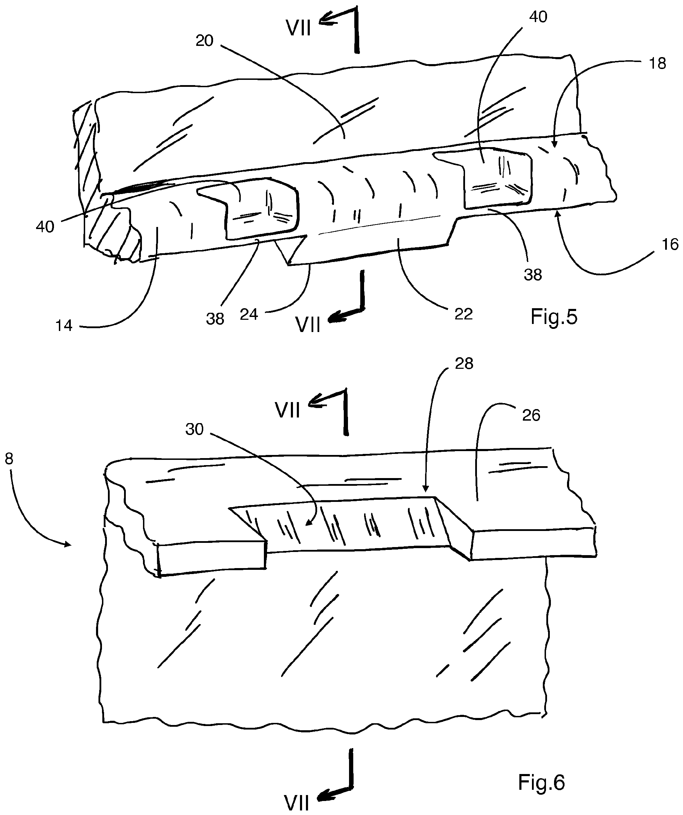

Comme représenté sur la figure 5, la protubérance 22 comprend une arête 24 propre à s'appuyer contre la trappe 8, notamment contre un bord périphérique 26 de la trappe 8.

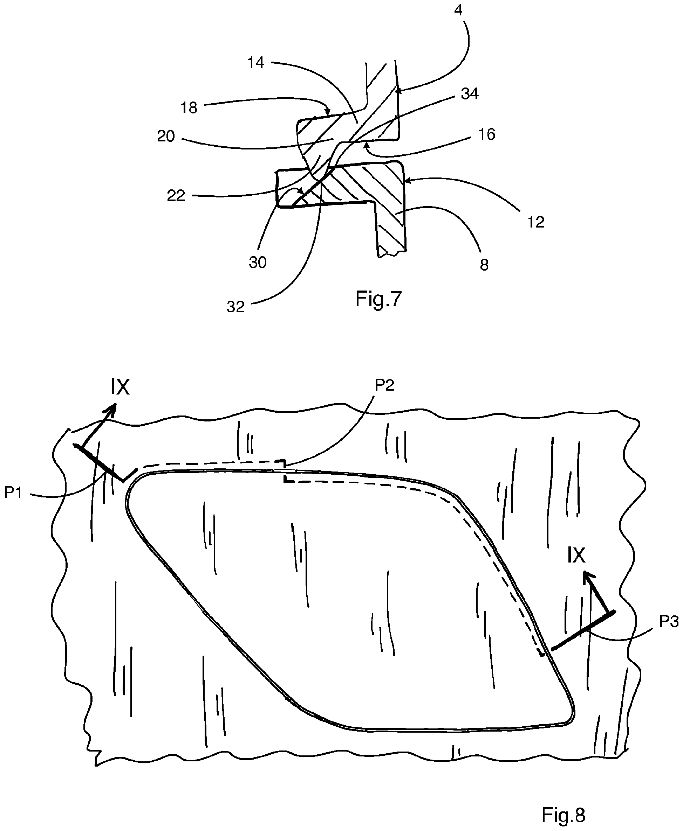

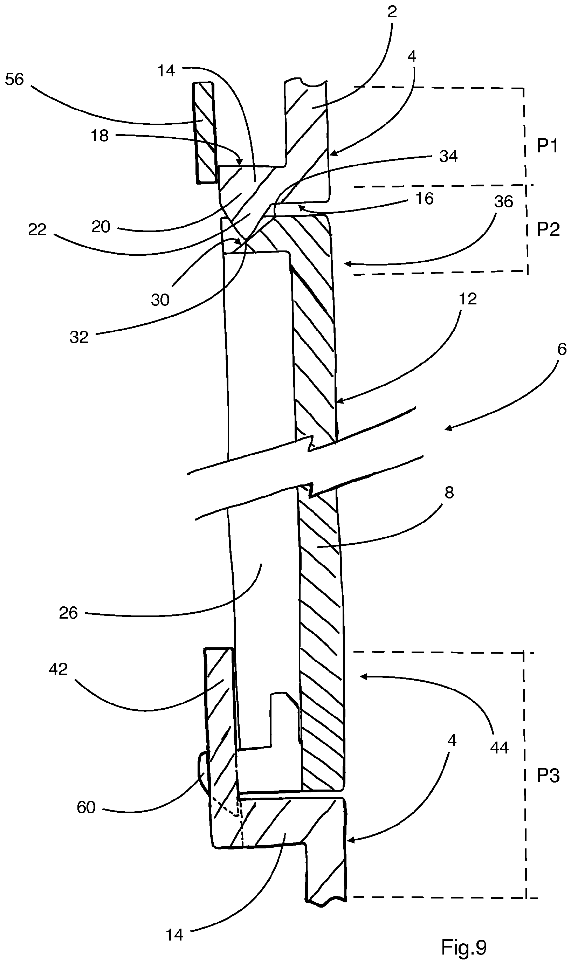

De façon plus précise, le bord 26 de la trappe 8 comporte une encoche 28, à l'intérieur de laquelle le bord 26 est coupé en un plan incliné 30 qui sert d'appui à l'arête 24 de la protubérance 22, comme on le voit sur les figures 7 et 9.

Ainsi, le contact entre la trappe 8 et la protubérance 22 de l'ergot se produit au sommet de l'arête 24, le long d'une ligne de contact 32. Cette ligne de contact 32 se trouve dans une zone relativement centrale du plan incliné 30, c'est-à-dire à distance des faces visible 12 et invisible de la trappe 8, de sorte qu'une arête 34 (entre le bord 26 et le plan incliné 30), éventuellement visible pour un observateur très attentif, ne peut présenter aucune marque d'usure due à l'appui de la protubérance 22 de l'ergot.

Les deux ergots 20-22 sont localisés sur deux bords opposés de l'ouverture 8 formant un premier angle aigu 36 de cette ouverture 8.

Chaque base 20 comprend deux portions amincies 38 du rebord périphérique 14, situées de part et d'autre de la protubérance 22. Chaque portion amincie 38 apporte une souplesse à la base 20, lui permettant de se déformer et d'escamoter la protubérance 22 de l'ergot, dans des conditions qui seront décrites plus avant.

Chaque portion amincie 38 du rebord 14 résulte de la présence d'un évidemment 40 débouchant latéralement et sur la face externe 18 du rebord périphérique 14. Les évidements 40 sont présents uniquement sur la face extérieure du rebord 18, de sorte que la face intérieure 16 du rebord périphérique 14 présente un aspect esthétique régulier, sans reliefs. On comprend que chaque portion amincie 38 est souple et déformable grâce à sa faible épaisseur, inférieure à l'épaisseur du rebord 14 au droit de l'ergot 22 et en dehors de la base 20. Chaque portion amincie 38 forme une lame ou membrane souple à effet ressort ou élastique.

Ainsi, grâce aux portions amincies 38, la base 20 est capable de se déformer élastiquement lorsqu'elle reçoit une sollicitation, pour escamoter la protubérance 22 de l'ergot, et de reprendre sa forme initiale par retour élastique lorsque cesse cette sollicitation.

La peau de pare-chocs 2 comporte également une première plage d'appui 42 le long du bord périphérique 14, dans un deuxième angle aigu 44 opposé au premier angle aigu 36. La plage d'appui 42 est positionnée légèrement en retrait de l'ouverture 6, vers l'intérieur de la peau de pare-chocs 2, pour servir d'appui à la trappe 8 en maintenant cette dernière affleurante, c'est-à-dire avec sa face extérieure visible 12 prolongeant la face extérieure visible 4 de la peau de pare-chocs 2.

Deux autres plages 46 sont présentes dans les deux angles obtus 48 de l'ouverture 6. Chacune des plages 46 porte une bosse 50. Les deux bosses 50 sont sensiblement parallèles entre elles et matérialisent une surface de roulement pour la trappe 8 qui bascule ainsi autour d'un axe de pivotement 52 lors de sa mise en place sur l'ouverture 6 et de son retrait de l'ouverture 6, comme cela est décrit par exemple dans le document US8985661B2. Les sommets des bosses 50 prennent appui sur la face intérieure non visible de la trappe, à l'intérieur de son bord 26. Lors du pivotement de la trappe 8, la face intérieure de la trappe roule ou bascule sur les bosses 50, entre sa position d'affleurement et une des positions de désaffleurement, dans laquelle elle possède une moitié rentrée dans la peau de pare-chocs et une moitié sortie de la peau de pare-chocs.

La trappe 8 présente sensiblement la même forme trapézoïdale que l'ouverture 6. À un premier angle aigu 54, destiné à rejoindre le premier angle aigu 36 de l'ouverture 6, la trappe 8 comporte une queue 56 de forme plane destinée à prendre appui contre l'extrémité du bord périphérique 14 de l'ouverture, pour retenir la trappe en position d'affleurement en l'empêchant de sortir de l'ouverture 6.

Un autre angle aigu 58 de la trappe 8 est destiné à rejoindre le deuxième angle aigu 44 de l'ouverture 6. À cet endroit, la position d'affleurement de la trappe 8 est assurée par appui du bord 26 de la trappe 8 contre la plage d'appui 42.

Enfin, la trappe 8 comporte un clip de retenue 60 qui est conformé pour s'arrimer à l'extrémité du rebord périphérique 14 de l'ouverture, à proximité de la plage d'appui 42, de façon à maintenir la trappe 8 en appui contre la plage d'appui 42.

La figure 9 résume l'ensemble du dispositif de maintien de la trappe 8 en position d'affleurement, à travers une ligne de coupe IX-IX comprenant trois plans P1, P2 et P3. Les pièces ou parties de pièces visibles dans ces trois plans sont comprises dans les intervalles P1, P2 et P3 sur la figure 9. Lorsque la trappe 8 est ainsi retenue en position d'affleurement, la queue 56 se trouve en appui contre le rebord périphérique 14 dans le premier angle aigu 36 et le clip 60 est arrimé au rebord périphérique 14 dans le deuxième angle aigu 44. De plus, le bord 26 de la trappe 8 se trouve en appui contre la plage d'appui 42. Les protubérances 22 des ergots jouent le rôle complémentaire de maintenir la queue 56 en appui contre le bord périphérique 14 de l'ouverture 6, en repoussant la trappe 8 vers l'extérieur de la peau de pare-chocs 2, grâce au plan incliné 30 sur lequel s'appuie l'arête 24 de la protubérance 22, comme expliqué précédemment.

Ainsi, la trappe 8 est montée mobile entre une position d'affleurement dans laquelle la trappe 8 est retenue par l'ergot 20-22 avec la face visible de la trappe 12 et la face visible de la pièce de carrosserie 4 affleurantes et des positions de désaffleurement dans lesquelles la trappe 8 repousse l'ergot 20-22 avec la face visible de la trappe 12 et la face visible de la pièce de carrosserie 4 désaffleurantes.

La trappe 8 et la peau de pare-chocs 2 constituent un ensemble d'habillage.

On comprend que l'ensemble d'habillage peut aussi comprendre tous moyens de fixation par encliquetage, éventuellement différents du clip 60, offrant un positionnement optimal en position d'affleurement et/ou des moyens de sécurité tels qu'une languette 62 destinée à se coincer dans une encoche (non représentée) de la peau de pare-chocs 2, de façon à éviter la perte de la trappe 8 lorsqu'elle est démontée. Ces moyens peuvent être disposés sur la pièce de carrosserie 2 et/ou sur la trappe 8.

Le fonctionnement de l'ensemble d'habillage selon l'invention va maintenant être décrit.

Initialement, la trappe 8 occupe sa position d'affleurement obturant l'ouverture 6. Un utilisateur et/ou une personne chargée d'effectuer un contrôle qualité de l'ensemble pousse sur la trappe 8 depuis l'extérieur vers l'intérieur du véhicule, au voisinage du premier angle aigu 36. La trappe bascule sur les bosses 50 autour de l'axe de pivotement 52 en s'enfonçant dans l'ouverture 6 dans l'angle aigu 36 et en dépassant de l'ouverture 6 dans l'angle aigu opposé 44. Pendant ce basculement, les plans inclinés 30 repoussent les arêtes 24 des protubérances 22. Les bases 20 se déforment alors élastiquement en escamotant les protubérances 22.

La trappe 8 se trouve alors dans une position intermédiaire dite « moitié rentrée - moitié sortie », dans laquelle une moitié de la trappe 8 (celle située du côté de l'angle 36 par rapport à l'axe de pivotement 52) pénètre dans la peau de pare-chocs 2, tandis que l'autre moitié (celle située du côté de l'angle 44 par rapport à l'axe de pivotement 52) en sort. La trappe 8 peut alors être extraite de l'ouverture.

Pour remettre la trappe 8 en place, l'utilisateur saisit la trappe 8 et l'introduit de biais dans la position « moitié rentrée - moitié sortie », qui vient d'être décrite. Une fois la trappe dans cette position, l'utilisateur pousse sur la trappe 8 au voisinage du second angle aigu 44 pour la plaquer par pivotement contre la plage d'appui 42. Pendant ce pivotement, les plans inclinés 30 appuient sur les protubérances 22 et les écartent légèrement, si nécessaire. La déformation élastique des bases 20 permet ce recul des protubérances 22. Le clip 60 s'encliquète et les ergots 20-22, en appui contre les plans inclinés 30, assurent, par retour élastique de leur base 20, la mise en contact de la queue 56 avec le bord périphérique 14 de l'ouverture 6. La trappe 8 retrouve sa position d'affleurement dans l'ouverture 6.

L'invention offre l'avantage que l'on peut répéter les opérations ci-dessus au moins cinq fois, sans déformer irréversiblement ni casser au moins une partie de l'ensemble.

Grâce à l'invention, l'utilisateur et/ou la personne chargée d'effectuer un contrôle qualité de l'ensemble effectue une opération simple ne nécessitant pas d'outil et très peu d'effort pour monter et démonter la trappe 8 dans l'ouverture 6 de la peau de pare-chocs 2. Du fait de la configuration particulière de l'invention, l'opération de montage et démontage de la trappe 8 n'endommage ni la trappe 8 ni la pièce de carrosserie 2 et offre un positionnement en affleurement avec un aspect esthétique satisfaisant, de préférence, tout au long de de la durée de vie du véhicule automobile.

## Revendications

1. Pièce de carrosserie (2) ayant une face visible (4), ladite pièce (2) comportant une ouverture (6) délimitée par un rebord périphérique rentrant (14) prolongeant la face visible (4) vers l'intérieur de l'ouverture (6), une portion du rebord périphérique (14) formant une base (20) pour un ergot ayant une protubérance (22) en saillie dudit rebord périphérique (14), la base (20) de l'ergot comprenant deux portions amincies (38) du rebord périphérique (14), situées de part et d'autre de la protubérance (22) de l'ergot et conférant à la base (20) une aptitude à se déformer élastiquement en escamotant la protubérance (22) de l'ergot, le rebord périphérique (14) présentant une face intérieure (16) délimitant l'ouverture (6) et une face extérieure (18) opposée à la face intérieure (16), **caractérisée en ce que** chaque portion amincie (38) du rebord périphérique (14) résulte uniquement d'un évidement de la face extérieure (18).

2. Pièce de carrosserie (2) selon la revendication précédente, comprenant au moins deux bases (20), chacune pour un ergot ayant une protubérance (22) en saillie du rebord périphérique (14).

3. Pièce de carrosserie (2) selon l'une quelconque des revendications précédentes, comportant au moins une plage d'appui (42) s'étendant vers l'intérieur de l'ouverture (6), sur une partie du contour de l'ouverture (6) et en retrait de la face visible (4).

4. Pièce de carrosserie (2) selon l'une quelconque des revendications précédentes, comportant, diamétralement opposées sur le contour de l'ouverture (6) et en retrait de la face visible (4), deux bosses (50) agencées pour former ensemble une surface de roulement définissant un axe de pivotement sensiblement parallèle à la face visible (4).

5. Pièce de carrosserie (2) selon l'une quelconque des revendications précédentes, étant une peau de pare-chocs.

6. Ensemble d'habillage comprenant une pièce de carrosserie (2) selon l'une quelconque des revendications précédentes et une trappe (8) ayant une face visible (12), la trappe (8) étant mobile entre une position d'affleurement dans laquelle la trappe (8) est retenue par l'ergot avec la face visible (12) de la trappe (8) et la face visible (4) de la pièce de carrosserie (2) affleurantes et des positions de désaffleurement dans lesquelles la trappe (8) repousse l'ergot avec la face visible (12) de la trappe (8) et la face visible (4) de la pièce de carrosserie (2) désaffleurantes, **caractérisé en ce que** la base (20) de l'ergot est apte à se déformer élastiquement en escamotant la protubérance (22) de l'ergot lorsque la trappe (8) passe dans les positions de désaffleurement et à reprendre sa forme par retour élastique lorsque la trappe (8) ne se trouve plus dans les positions de désaffleurement.

7. Ensemble selon la revendication précédente, dans lequel la trappe (8) comporte un bord muni d'un plan incliné (36) servant d'appui à la protubérance (22) de l'ergot en position d'affleurement de la trappe.

8. Ensemble selon l'une quelconque des revendications 6 à 7, dans lequel la trappe (8) comporte au moins un clip (60) apte à s'encliqueter contre une face intérieure de la pièce de carrosserie (2) lorsque la trappe (8) est en position d'affleurement.

9. Procédé de contrôle de la qualité d'un ensemble selon l'une quelconque des revendications 6 à 8, **caractérisé en ce qu'**il consiste à réitérer la succession d'étapes suivantes au moins cinq fois :
- saisie de la trappe (8) en position d'affleurement,
- déplacement de la trappe (8) en positions de désaffleurement,
- repositionnement de la trappe (8) en position d'affleurement.

## Patentansprüche

1. Karosserieteil (2) mit einer Sichtfläche (4), wobei das Karosserieteil (2) eine Öffnung (6) aufweist, die durch einen einspringenden Umfangsflansch (14) begrenzt ist, der die Sichtfläche (4) in Richtung des Inneren der Öffnung (6) verlängert, **dadurch gekennzeichnet, dass** einen Abschnitt des Umfangsflansches (14), der eine Basis (20) für eine Lasche bildet, die einen Vorsprung (22) aufweist, der von dem Umfangsflansch (14) vorsteht, **dadurch gekennzeichnet, dass** die Basis (20) der Lasche zwei verdünnte Abschnitte (38) des Umfangsflansches (14) umfasst die auf beiden Seiten des Vorsprungs (22) der Lasche angeordnet sind und der Basis (20) die Fähigkeit verleihen, sich durch Zurückziehen des Vorsprungs (22) der Lasche elastisch zu verformen, wobei der Umfangsflansch (14) eine die Öffnung (6) begrenzende Innenfläche (16) und eine der Innenfläche (16) gegenüberliegende Außenfläche (18) aufweist, **dadurch gekennzeichnet, dass** jeder verdünnte Abschnitt (38) des Umfangsflansches (14) ausschließlich aus einer Aussparung in der Außenfläche (18) resultiert.

2. Karosserieteil (2) nach einem der vorhergehenden Ansprüche, mit mindestens zwei Basen (20) für jeweils eine Lasche, der einen vom Umfangsflansch (14) abstehenden Vorsprung (22) aufweist.

3. Karosserieteil (2) nach einem der vorhergehenden Ansprüche, umfassend mindestens einen sich zum Inneren der Öffnung (6) hin erstreckenden, auf einem Teil der Kontur der Öffnung (6) liegenden und von der Sichtfläche (4) zurückgesetzten Stützbereich (42).

4. Karosserieteil (2) nach einem der vorhergehenden Ansprüche, mit zwei auf der Kontur der Öffnung (6) diametral gegenüberliegenden und von der Sichtfläche (4) zurückgesetzten Höckern (50), die so angeordnet sind, dass sie zusammen eine Abrollfläche bilden, die eine zur Sichtfläche (4) im Wesentlichen parallele Schwenkachse definiert.

5. Karosserieteil (2) nach einem der vorhergehenden Ansprüche, das eine Stoßfängerhaut ist.

6. Verkleidungsbaugruppe mit einem Karosserieteil (2) nach einem der vorhergehenden Ansprüche und einer Klappe (8) mit einer Sichtfläche (12), die Klappe (8) zwischen einer bündigen Position, in der die Klappe (8) durch die Lasche gehalten wird, wobei die Sichtfläche (12) der Klappe (8) und die Sichtfläche (4) des Karosserieteils (2) bündig sind, und nicht bündigen Positionen, in denen die Klappe (8) die Lasche zurückdrückt, wobei die Sichtfläche (12) der Klappe (8) und die Sichtfläche (4) des Karosserieteils (2) nicht bündig sind, bewegbar ist **dadurch gekennzeichnet, dass** die Basis (20) der Lasche in der Lage ist, sich durch Zurückziehen des Vorsprungs (22) der Lasche elastisch zu verformen, wenn die Klappe (8) in den entkoppelte Positionen übergeht, und ihre Form durch elastische Rückstellung wieder anzunehmen, wenn sich die Klappe (8) nicht mehr in den entkoppelte Positionen befindet.

7. Verkleidungsbaugruppe nach dem vorhergehenden Anspruch, bei der die Klappe (8) einen Rand aufweist, der mit einer schrägen Ebene (36) versehen ist, die als Auflage für den Vorsprung (22) der Lasche in der bündigen Position der Klappe dient.

8. Verkleidungsbaugruppe nach einem der Ansprüche 6 bis 7, wobei die Klappe (8) mindestens eine Klammer (60) aufweist, die gegen eine Innenfläche des Karosserieteils (2) schnappen kann, wenn sich die Klappe (8) in einer bündigen Position befindet.

9. Verfahren zur Kontrolle der Qualität einer Verkleidungsbaugruppe nach einem der Ansprüche 6 bis 8, **dadurch gekennzeichnet, dass** es darin besteht, die folgende Folge von Schritten mindestens fünfmal zu wiederholen:
- Fassen die Klappe (8) in der bündigen Position an,
- Bringen die Klappe (8) in die entkoppelte Position,
- Bringen die Klappe (8) wieder in die bündige Position.

## Claims

1. Bodywork part (2) having a visible face (4), said part (2) comprising an opening (6) delimited by a receding peripheral rim (14) extending the visible face (4) towards the inside of the opening (6), a portion of the peripheral rim (14) forming a base (20) for a lug having a protuberance (22) projecting from said peripheral rim (14), the base (20) of the lug comprising two thinned portions (38) of the peripheral rim (14), said thinned portions (38) being located on both side of the protuberance (22) of the lug and giving the base (20) an ability to deform elastically by retracting the protuberance (22) of the lug, the peripheral rim (14) having an inner face (16) delimiting the opening (6) and an outer face (18) opposite the inner face (16), **characterised in that** each thinned portion (38) of the peripheral rim (14) results solely from a recess in the outer face (18).

2. Bodywork part (2) according to the preceding claim, comprising at least two bases (20), each for a lug having a protuberance (22) projecting from the peripheral rim (14).

3. Bodywork part (2) according to any one of the preceding claims, comprising at least one support area (42) extending towards the interior of the opening (6), on a part of the contour of the opening (6) and recessed from the visible face (4).

4. Bodywork part (2) according to any one of the preceding claims, comprising, diametrically opposed on the contour of the opening (6) and recessed from the visible face (4), two bumps (50) arranged to form together a rolling surface defining a pivot axis substantially parallel to the visible face (4).

5. Bodywork part (2) according to any one of the preceding claims, being a bumper skin.

6. Cover assembly comprising a bodywork part (2) according to any one of the preceding claims and a hatch (8) having a visible face (12), the hatch (8) being movable between a flush position in which the hatch (8) is retained by the lug with the visible face (12) of the hatch (8) and the visible face (4) of the bodywork part (2) being flush, and non-flush positions in which the hatch (8) pushes back the lug with the visible face (12) of the hatch (8) and the visible face (4) of the bodywork part (2) being non-flush, **characterised in that** the base (20) of the lug is capable of elastically deforming by retracting the protuberance (22) of the lug when the hatch (8) passes into the non-flush positions and of resuming its shape by elastic return when the hatch (8) is no longer in the non-flush positions.

7. Assembly according to the preceding claim, in which the hatch (8) comprises an edge provided with an inclined plane (36) serving as a support for the protuberance (22) of the lug in the flush position of the hatch.

8. Assembly according to any one of claims 6 to 7, wherein the hatch (8) comprises at least one clip (60) adapted to snap against an inner face of the bodywork part (2) when the hatch (8) is in a flush position.

9. Control method of the quality of an assembly according to any one of claims 6 to 8, **characterised in that** it consists in repeating the succession of the following steps at least five times:
- grasping the hatch (8) in flush position,
- moving the hatch (8) to non-flush positions,
- repositioning the hatch (8) to flush position.
